(19)

Europäisches Patentamt

European Patent Office

Office européen des brevets

(11)  EP 4 657 111 A2

(12)  **EUROPEAN PATENT APPLICATION**

(43) Date of publication:
03.12.2025   Bulletin 2025/49

(21) Application number: 25170642.0

(22) Date of filing: **15.04.2025**

(51) International Patent Classification (IPC):
**G01S 7/486** (2020.01)      **G01S 7/4912** (2020.01)
**G01S 17/06** (2006.01)

(52) Cooperative Patent Classification (CPC):
**G01S 7/4912; G01S 7/486; G01S 17/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.05.2024  FI 20245688**

(71) Applicant: **Pixieray Oy**
**02630 Espoo (FI)**

(72) Inventors:
• **Pitkänen, Ari**
**01200 Vantaa (FI)**
• **Timonen, Juha**
**02700 Kauniainen (FI)**

(74) Representative: **Moosedog Oy**
**Kurjenmäenkatu 10 B 49**
**20700 Turku (FI)**

(54)  **COMPENSATING FOR NON-LINEARITY IN PHOTODIODE RESPONSE INDUCED BY AMBIENT LIGHT**

(57)      A tracking system (100) is disclosed. A current reading of a photocurrent of a photodiode (106) is collected for a current ambient light condition, whilst an infrared light emitter (102) is switched on. Deviation data corresponding to an ambient light condition that matches with the current ambient light condition is accessed. The deviation data comprises at least one of: a reading of an ambient current of the photodiode collected when the infrared light emitter is switched off, a reading of the photocurrent of the photodiode collected when the infrared light emitter is switched on, a difference between said reading of the ambient current and said reading of the photocurrent, for the ambient light condition. The current reading of the photocurrent of the photodiode for the current ambient light condition is corrected, based on the deviation data, and utilised to determine a position and an orientation of a target (104).

FIG. 1

EP 4 657 111 A2

**Description**

TECHNICAL FIELD

The present disclosure relates to tracking systems employing infrared light emitters and photodiodes. The present disclosure also relates to tracking methods employing infrared light emitters and photodiodes.

BACKGROUND

Some conventional tracking systems (for example, such as eye-tracking systems, or similar) employ infrared light emitting diodes (IR LEDs) and photodiodes. In a typical tracking system, an IR LED may emit IR light having a wavelength of approximately 950 nanometres, and a response of a photodiode (typically measured in terms of a photocurrent of the photodiode) to the IR light incident upon the photodiode upon being reflected off a target is often assumed to be linear, and should be impacted only by the wavelength of the IR light (for example, such as 950 nm or similar). However, the response of the photodiode shows a non-linear behaviour, due to a presence of ambient light (especially bright ambient light) in surroundings. Such non-linearity in the response causes errors in the tracking system.
A typical reason for the non-linear behaviour is a presence of defects in a semiconductor lattice of a photodiode and an electro-hole recombination rate. With low-intensity incoming light, a photodiode's efficiency may be, for example, 90 percent. In such an example, 10% of the incident photons do not create a photocurrent because they get recombined in lattice defects and traps. However, high-intensity incoming light (namely, bright ambient light) fills most of the lattice defects and traps. Therefore, any additional light (namely, any small delta in light intensity, for example, such as the IR light of an IR LED reflecting off a target) would not find any traps available, thereby resulting in a higher efficiency (that is, more than 90 percent in this example). As a result, the reading of the photocurrent of the photodiode would be higher in the presence of the high-intensity incoming light as compared to the low-intensity incoming light, even for the IR light of the same intensity.
Moreover, a wavelength of the light also plays an important role. Short wavelengths (for example, such as those corresponding to green or red light) show a smaller amount of this non-linear behaviour. This is because they penetrate less, which may be due to their confinement to an intrinsic area of a substrate that is lightly doped. Longer wavelengths (such as IR) show a large amount of this non-linear behaviour. This is because longer wavelengths penetrate deeper, thereby reaching an inner core of the substrate that is highly doped. In other words, they penetrate beyond a depletion zone of the substrate. Consequently, a wavelength range from 850 nm to 950 nm seems to be worse affected as compared to a wavelength range from 660 nm to 850 nm.
Therefore, in light of the foregoing discussion, there exists a need to overcome the aforementioned drawbacks.

SUM MARY

The present disclosure seeks to provide a tracking system and a tracking method that is capable of compensating for a non-linearity in a response of a photodiode, caused by lattice defects and traps of a photodiode, that is induced by ambient light. The aim of the present disclosure is achieved by a tracking system and a tracking method, which facilitate a simple, yet accurate and reliable way to correct readings of a photocurrent of a particular photodiode based on deviation data specific to that particular photodiode, as defined in the appended independent claims to which reference is made to. Advantageous features are set out in the appended dependent claims.
Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

BRIEF DESCRIPTION OF THE DRAWINGS

FIG. 1 is a schematic diagram of a tracking system, in accordance with an embodiment of the present disclosure;

FIGs. 2A and 2B depict a simplified example implementation of a tracking system, in accordance with an embodiment of the present disclosure;

FIG. 3 depicts steps of a tracking method, in accordance with an embodiment of the present disclosure; and

FIG. 4 depicts a curve plotted between readings of a photocurrent and readings of an ambient current of a photodiode for different ambient light conditions, in accordance with an embodiment of the present disclosure.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a tracking system comprising:

at least one infrared (IR) light emitter that is employed to emit light towards a target;

at least one photodiode that is employed to sense reflections of the light off the target;

a data storage; and

at least one processor configured to:

when sensing the reflections, collect a current reading of a photocurrent of the at least one photodiode for a current ambient light condition, whilst the at least one IR light emitter is switched on;

access, from the data storage, deviation data corresponding to at least one of a plurality of ambient light conditions that matches with the current ambient light condition, said deviation data comprising at least one of: a reading of an ambient current of the at least one photodiode collected when the at least one IR light emitter is switched off, a reading of the photocurrent of the at least one photodiode collected when the at least one IR light emitter is switched on, a difference between said reading of the ambient current and said reading of the photocurrent, for the at least one of the plurality of ambient light conditions;

correct the current reading of the photocurrent of the at least one photodiode for the current ambient light condition, based on the deviation data corresponding to the at least one of the plurality of ambient light conditions; and

utilise the current reading of the photocurrent of the at least one photodiode, after correcting, to determine a position and an orientation of the target.

In a second aspect, an embodiment of the present disclosure provides a tracking method comprising:

emitting light towards a target by employing at least one infrared (IR) light emitter;

sensing reflections of the light off the target by employing at least one photodiode, wherein the step of sensing the reflections comprises collecting a current reading of a photocurrent of the at least one photodiode for a current ambient light condition, whilst the at least one IR light emitter is switched on;

accessing, from a data storage, deviation data corresponding to at least one of a plurality of ambient light conditions that matches with the current ambient light condition, said deviation data comprising at least one of: a reading of an ambient current of the at least one photodiode collected when the at least one IR light emitter is switched off, a reading of the photocurrent of the at least one photodiode collected when the at least one IR light emitter is switched on, a difference between said reading of the ambient current and said reading of the photocurrent, for the at least one of the plurality of ambient light conditions;

correcting the current reading of the photocurrent of the at least one photodiode for the current ambient light condition, based on the deviation data corresponding to the at least one of the plurality of ambient light conditions; and

utilising the current reading of the photocurrent of the at least one photodiode, after correcting, to determine a position and an orientation of the target.

The present disclosure provides the aforementioned tracking system and the aforementioned tracking method, which facilitate a simple, yet accurate and reliable way to correct readings of a photocurrent of a particular photodiode based on deviation data specific to that particular photodiode, in real time or near-real time. Notably, all photodiodes do not have a same response to a same intensity of light. A response (measured in terms of a photocurrent) of one photodiode may vary from that of another photodiode; such variation may occur from one batch of photodiodes to another, or even from one photodiode to another. Therefore, by accessing the deviation data specific to the at least one photodiode (which was previously stored in the data storage) and utilising this deviation data, the current reading of the photocurrent of the at least one photodiode can be corrected. This allows for determining the position and the orientation of the target very accurately. In this regard, it will be appreciated that the position and the orientation of the target can be determined because a position and optionally an orientation of the at least one IR light emitter and the at least one photodiode are pre-known.

The tracking system and the tracking method are simple, robust, fast, support real time tracking of the target, and can be implemented with ease. Moreover, the tracking system and the tracking method are susceptible to be implemented for eye-tracking purposes, wherein the target is a given eye of a user. In such a case, the tracking system and the tracking method can be implemented in an eyewear apparatus. Examples of the eyewear apparatus include, but are not limited to, a pair of glasses, a pair of sunglasses, smart glasses, and a head-mounted display (HMD) device.

In some implementations, the at least one photodiode comprises a single photodiode. In other implementations, the at least one photodiode comprises a plurality of photodiodes. In such implementations, the deviation data specific to each of the plurality of photodiodes or at least a majority of the plurality of photodiodes can be pre-stored.

Moreover, in some implementations, the at least one IR light emitter comprises a single IR light emitter. In other implementations, the at least one IR light emitter comprises a plurality of IR light emitters. In such implementations, the deviation data can be pre-stored for each pair of a photodiode and an IR light emitter. Alternatively, optionally, the deviation data can be pre-stored for a given pair of a photodiode and an IR light emitter that are selected to be employed in a synchronous manner, depending on a relative position of the photodiode with respect to the IR light emitter.

As an example, in a case where the tracking system and the tracking method are implemented in an eyewear apparatus, the eyewear apparatus comprises a lens and a frame employed to hold the lens. In such a case, the at least one IR light emitter can be arranged on at least one of: the frame, a periphery of the lens. Likewise, the at least one photodiode can be arranged on at least one of: the frame, the periphery of the lens. Herein, the term "periphery" refers to an area in a proximity of an edge of the lens. Optionally, said area is on at least one of: a world-facing surface of the lens, a user-facing surface of the lens, a curved surface (on a side) between the world-facing surface and the user-facing surface. It is to be understood that the term "world-facing surface" refers to a surface of the lens that faces outward, away from the user's eye, towards a real-world environment in which the user is present. The term "user-facing surface" refers to a surface of the lens that faces inward, towards the user's eye. The term "curved surface" refers to a narrow, side, curved surface that lies between the world-facing surface and the user-facing surface. It will be appreciated that the curved surface is in contact with the frame when the lens is fit inside the frame (having a full rim or a partial rim). Moreover, an area of the curved surface could be a preferrable area for arranging electronic elements (for example such as the at least one IR light emitter and the at least one photodiode) within the eyewear apparatus. This is because a location of the curved surface enables in concealing said electronic elements in the eyewear apparatus, thereby enhancing its overall aesthetic appeal. In other words, the electronic elements arranged at the curved surface can be discreetly hidden from a view, whilst serving their intended purposes. This facilitates in maintaining a sleek and visually appealing design of the eyewear apparatus. In this example, optionally, the deviation data can be pre-stored for a given pair of a photodiode and an IR light emitter that are positioned opposite to each other, because the given pair is suitable for employing in a synchronous manner to determine the position and the orientation of the target (the given eye, in this case). Accordingly, the deviation data can be pre-stored for each such pair of a photodiode and an IR light emitter that are positioned opposite to each other.

Examples of the at least one IR light emitter include, but are not limited to, a light-emitting diode (LED) and a laser. The laser may be a vertical-cavity surface-emitting laser (VCSEL), an edge-emitting laser (EEL), or the like. A technical benefit of employing IR (or near-IR) light is that it is not visible to the user, and therefore, does not cause any disturbance to the user.

Notably, the at least one processor controls an overall operation of the tracking system. For this purpose, the at least one processor is communicably coupled to the at least one IR light emitter, the at least one photodiode and the data storage. It will be appreciated that the at least one processor may comprise a microcontroller or a microprocessor to control operations of the at least one IR light emitter and the at least one photodiode.

The photodiode may, for example, be made up of silicon, germanium, indium gallium arsenide, mercury cadmium telluride, or the like. Photodiodes are well-known in the art. Notably, when the at least one IR light emitter is switched on, readings of the photocurrent of the at least one photodiode are collected by the at least one processor. The photocurrent is an electric current that is generated when the light (emitted by the at least one IR light emitter) is incident upon the at least one photodiode after being reflected off the target. Since the at least one photodiode is capable of converting light energy into electrical signals, when photons (namely, particles of the light) strike a photo-sensitive material of the at least one photodiode, they typically liberate electrons, thereby creating the electric current. A magnitude of the photocurrent is directly proportional to an intensity of the light incident upon the at least one photodiode. In other words, greater the intensity (namely, brightness) of the light, greater is the magnitude of the photocurrent, and vice versa. The ambient current is indicative of a response of the at least one photodiode when the at least one IR light emitter is switched off, and only ambient light is present.

There will now be described various different ways in which the current reading of the photocurrent of the at least one photodiode for the current ambient light condition can be corrected. It may be appreciated that the use of the term "current" in phrases "current reading of a photocurrent" and "current ambient light condition" is different from the use thereof in the phrases "photocurrent" or "electric current". In the previous use, the term "current" relates to a moment of time; and in the latter, it relates to the flow of electric charge.

In an embodiment, the deviation data for the at least one of the plurality of ambient light conditions (that matches with the current ambient light condition) comprises the reading of the ambient current of the at least one photodiode. In such a case, the current reading of the photocurrent can be corrected by multiplying a correction factor with a difference between the current reading of the photocurrent reading and the reading of the ambient current (indicated in the deviation data). The correction factor may beneficially correspond to the current ambient light condition or to the at least one of the plurality of ambient light conditions. The deviation data may further comprise the correction factor corresponding to each of the plurality of ambient light conditions.

In another embodiment, the deviation data for the at least one of the plurality of ambient light conditions comprises the reading of the photocurrent and the difference between the reading of the ambient current and the reading of the photocurrent of the at least one photodiode. In such a case, the reading of the ambient current can be calculated from the reading of the photocurrent and said difference. The current reading of the photocurrent can then be corrected by multiplying the correction factor with the difference between the current reading of the photocurrent reading and the reading of the ambient current (calculated from the deviation data).

Beneficially, the pre-stored deviation data specific to the photodiode and ambient light conditions enables accurate, real-time or near-real-time correction of photocurrent readings during operation, thus ensuring robust performance of the tracking system across varying ambient light and temperature conditions, in applications such as eye-tracking, for example. Thus, making the tracking system highly reliable, efficient, and user-friendly, particularly for applications like eye-tracking in wearable devices. It may be appreciated that photodiodes from different batches or even individual photodiodes can have unique responses. In such cases, the pre-stored deviation data ensures that the corrections are tailored to the specific photodiode being used. Thus, resulting in a more reliable and accurate determination of the target's position and orientation.

It may be appreciated that by using the pre-stored deviation data specific to the photodiode and ambient light conditions, including ambient current, photocurrent, and their differences, the disclosed tracking system is novel and non-obvious over the existing prior arts that fail to teach the factors for such compensation.

In yet another embodiment, the at least one processor is configured to collect a current reading of the ambient current of the at least one photodiode for the current ambient light condition, whilst the at least one IR light emitter is switched off, wherein the current reading of the photocurrent of the at least one photodiode for the current ambient light condition is corrected, further based on the current reading of the ambient current for the current ambient light condition. The current reading of the photocurrent can then be corrected by multiplying the correction factor with a difference between the current reading of the photocurrent and the current reading of the ambient current. This can be mathematically represented as follows:

$$P_{correct} = (P_{current} - A_{current}) \times F$$

wherein:

"$P_{correct}$" represents the corrected current reading of the photocurrent,
"$P_{current}$" represents the current reading of the photocurrent as collected (namely, sampled),
"$A_{current}$" represents the current reading of the ambient current as collected, and
"F" represents the correction factor.

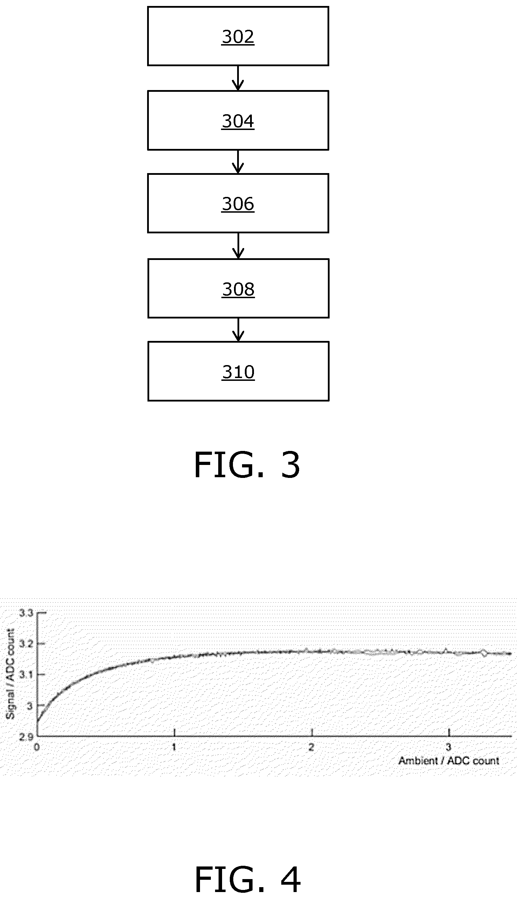

It will be appreciated that the correction factor can be determined for the current ambient light condition from a correction curve that has been calculated previously. Optionally, the deviation data further comprises the correction curve. Herein, the correction curve is a curve that is an inverse of a curve plotted between the photocurrent and the ambient current of the at least one photodiode for each of the plurality of ambient light conditions. One such curve has been illustrated in conjunction with FIG. 4. In this regard, the correction factor can be determined using a mathematical equation as follows:

$$Pa_i \times F_i = 1$$

wherein:

"Pa$_i$" represents the reading of the photocurrent collected at a given ambient light condition, and

"F$_i$" represents the correction factor for the given ambient light condition.

Pursuant to embodiments of the present disclosure, respective deviation data of the plurality of ambient light conditions are pre-stored at the data storage. It will be appreciated that this can be done at a factory unit even before the tracking system is actually used in real life. Optionally, in this regard, the at least one processor is configured to:

(i) collect a reading of the ambient current of the at least one photodiode for a given ambient light condition, whilst the at least one IR light emitter is switched off;

(ii) collect a reading of the photocurrent of the at least one photodiode for the given ambient light condition, whilst the at least one IR light emitter is switched on;

(iii) optionally, calculate a difference between the reading of the ambient current and the reading of the photocurrent for the given ambient light condition;

(iv) store, at the data storage, deviation data corresponding to the given ambient light condition, wherein the deviation data comprises at least one of: the reading of the ambient current, the reading of the photocurrent, the calculated difference, for the given ambient light condition; and

(v) repeat (i) to (iv) for the plurality of ambient light conditions.

It will be appreciated that the reading of the ambient current and the reading of the photocurrent of the at least one diode are collected corresponding to a known reflector and a known current level of the at least one IR light emitter. This allows to eliminate any deviation due to use of different reflectiveness of different reflectors and/or different current levels of the at least one IR light emitter. Optionally, the deviation data further comprises a reading of an input current of the at least one IR light emitter. The input current indicates the brightness level of the at least one IR light emitter. This allows to take into consideration a difference between the brightness level of the at least one IR light emitter and a brightness level of the given ambient light condition. In an example, the deviation data accounts for a wide range of ambient light conditions, including fully dark and brightly lit environments. This ensures that the system can operate effectively in diverse settings, such as: indoor environments with artificial lighting, outdoor environments with bright sunlight, and transitional environments where lighting conditions change rapidly. Beneficially, the pre-stored deviation data for multiple ambient light conditions, allows the tracking system to seamlessly adapt to these variations, maintaining high accuracy and reliability.
Moreover, in some implementations, the reading of the ambient current is used to indicate the given ambient light condition in the deviation data. Thus, different ambient light conditions can be indicated and distinguished from each other using their corresponding readings of the ambient current of the at least one photodiode. A technical benefit of this is that a separate ambient light sensor is not required for determining the given ambient light condition. Moreover, in some implementations, the photodiode itself determines the ambient light condition by measuring the ambient current when the IR light emitter is switched off, thus, beneficially, eliminating the need for additional sensors such as ambient light sensors. Moreover, the absence of additional sensors lowers manufacturing costs.
Optionally, in such implementations, the at least one processor is configured to:

collect a current reading of the ambient current of the at least one photodiode for the current ambient light condition, whilst the at least one IR light emitter is switched off; and

identify the at least one of the plurality of ambient light conditions that matches with the current ambient light condition, based on the current reading of the ambient current.

Thus, the at least one of the plurality of ambient light conditions is considered to match the current ambient light condition, when a reading of the ambient current of the at least one photodiode for the at least one of the plurality of ambient light conditions (indicated in the deviation data) matches with the current reading of the ambient current.
In other implementations, the tracking system further comprises an ambient light sensor that is employed to sense an average illuminance in an ambient environment, wherein the at least one processor is configured to collect a reading of the average illuminance for the given ambient light condition, wherein the reading of the average illuminance is used to indicate the given ambient light condition in the deviation data. Thus, the deviation data further comprises the reading of the average illuminance, which indicates the given ambient light condition. In such a case, different ambient light conditions are indicated and distinguished from each other using their corresponding readings of the average illuminance captured using the ambient light sensor.

Optionally, in such implementations, the at least one processor is configured to:

collect a current reading of the average illuminance for the current ambient light condition; and

identify the at least one of the plurality of ambient light conditions that matches with the current ambient light condition, based on the current reading of the average illuminance.

Thus, the at least one of the plurality of ambient light conditions is considered to match the current ambient light condition, when a reading of the average illuminance for the at least one of the plurality of ambient light conditions (indicated in the deviation data) matches with the current reading of the average illuminance.

Furthermore, it will be appreciated that the response of the at least one photodiode is also temperature dependent. This means that very low temperatures (for example, in a range of -15 to +5 degree Celsius, or similar) or very high temperatures (for example, in a range of 40 to 70 degree Celsius, or similar) can also affect the response of the at least one photodiode, thereby leading to errors in the readings of the photocurrent. Therefore, in order to compensate for an effect of an external heat source or a low/high ambient temperature, namely, temperature compensation, the tracking system optionally further comprises a temperature sensor, wherein the plurality of ambient light conditions comprise a fully-dark ambient light condition, wherein the at least one processor is configured to:

collect different readings of the ambient current of the at least one photodiode for the fully-dark ambient light condition corresponding to different temperature ranges; and

store, at the data storage, the different readings of the ambient current of the at least one photodiode for the fully-dark ambient light condition corresponding to the different temperature ranges.

It will be appreciated that these steps are performed before the tracking system is even used in real life. The temperature sensor can be arranged in a proximity of the at least one photodiode to account for temperature-dependent variations in photodiode response. The different temperature ranges can be selected in any suitable manner. As an example, the different temperature ranges can be as follows:

-15 to -5 degree Celsius,

-5 to +5 degree Celsius,

+5 to +15 degree Celsius,

+15 to +25 degree Celsius,

+25 to +35 degree Celsius,

+35 to +45 degree Celsius,

+45 to +55 degree Celsius, or similar.

Optionally, the at least one processor is configured to:

determine a current ambient temperature using the temperature sensor, when collecting the current reading of the photocurrent of the at least one photodiode for the current ambient light condition; and

access, from the data storage, a reading of the ambient current of the at least one photodiode for the fully-dark ambient light condition corresponding to a given temperature range that matches with the current ambient temperature,

wherein the current reading of the photocurrent of the at least one photodiode for the current ambient light condition is corrected, further based on the reading of the ambient current for the fully-dark ambient light condition corresponding to the given temperature range that matches with the current ambient temperature.

In this regard, photocurrent deviation data is stored for different temperature ranges, and corrections are applied accordingly. This allows to compensate for the effect of any external heat source (such as nearby electronic components) or a low/high ambient temperature, and ensures consistent performance across a wide range of operating conditions. The current reading of the photocurrent can be corrected by multiplying a correction factor with a second difference between the aforesaid difference (between the current reading of the photocurrent and the current reading of the ambient current) and the reading of the ambient current for the fully-dark ambient light condition (corresponding to the given temperature range that matches with the current ambient temperature). This can be mathematically represented as follows:

$$P_{correct+temp} = (P_{current} - A_{current} - D_{temp}) \times F$$

wherein:

"$P_{correct+temp}$" represents the corrected current reading of the photocurrent, whilst also taking into account the effect of temperature, in addition to the effect of the current ambient light condition,

"$P_{current}$" represents the current reading of the photocurrent as collected,

"$A_{current}$" represents the current reading of the ambient current as collected,

"$D_{temp}$" represents the reading of the ambient current for the fully-dark ambient light condition corresponding to the given temperature range that matches with the current ambient temperature, and "F" represents the correction factor.

It will be appreciated that the correction factor employed in this case may be different from that employed in another case where only the effect of the current ambient light condition is taken into account.

Moreover, dynamically correcting photocurrent readings, based on the deviation data corresponding to the photocurrent, ambient light conditions and temperature, during operation enables accurate tracking of a target's position and orientation. Furthermore, the use of correction curve derived from the pre-stored deviation data for real-time correction, combined with temperature compensation, represents a novel and non-obvious improvement over the calibration methods used by conventional methods. Herein, when combined with the pre-stored deviation data or real-time correction, the temperature compensation is not merely a linear approximation (for example, offset and inclination values correction) but dynamically corrects photocurrent readings in real-time on the current ambient light and temperature conditions. It may be appreciated that the pre-stored deviation data eliminates manual adjustment or calibration of the tracking system by the user for different ambient light conditions. The tracking system automatically applies the necessary corrections, providing a smooth and hassle-free experience, thus making it a user-friendly system.

In an implementation, the tracking system determines the position and orientation of the target (e.g., an eye in an eye-tracking system) by analysing the corrected photocurrent readings of the photodiode(s). The corrected readings represent the true intensity of the reflected IR light, free from the effects of ambient light and temperature variations. In this regard, the tracking system determines the target's position based on the intensity and distribution of the reflected light sensed by the photodiode(s). Herein, the spatial arrangement of the IR light emitter(s) and photodiode(s) is known and used as a reference for such position calculation. The orientation of the target is determined by analysing the angular distribution of the reflected light. The relative intensities of the corrected photocurrent readings from multiple photodiodes are used to infer the target's orientation. The processor subsequently performs mathematical calculations, such as triangulation or interpolation, to process the corrected photocurrent readings and accurately determine the target's position and orientation in real-time or near-real-time, even in the presence of varying ambient light and temperature conditions.

In an example, for applications such as eye-tracking, dynamic tracking is required. In this regard, the disclosed tracking system is configured to continuously adjust for changes in ambient light conditions without interrupting the tracking process. Moreover, real-time corrections to the photocurrent readings ensures that the system can keep up with rapid movements of the target (e.g., an eye or another object being tracked). Beneficially, such capability of the disclosed tracking system enhances the overall performance and usability of the tracking system in dynamic environments. Alternatively, the disclosed system may be employed for applications such as gesture recognition or object tracking, by tailoring the deviation data to the requirements of the desired applications.

The present disclosure also relates to the tracking method as described above. Various embodiments and variants disclosed above, with respect to the aforementioned first aspect, apply *mutatis mutandis* to the tracking method.

Optionally, the tracking method further comprises collecting a current reading of the ambient current of the at least one photodiode for the current ambient light condition, whilst the at least one IR light emitter is switched off, wherein the current reading of the photocurrent of the at least one photodiode for the current ambient light condition is corrected, further based on the current reading of the ambient current for the current ambient light condition.

Optionally, the tracking method further comprises:

(i) collecting a reading of the ambient current of the at least one photodiode for a given ambient light condition, whilst the at least one IR light emitter is switched off;

(ii) collecting a reading of the photocurrent of the at least one photodiode for the given ambient light condition, whilst the at least one IR light emitter is switched on;

(iii) optionally, calculating a difference between the reading of the ambient current and the reading of the photocurrent for the given ambient light condition;

(iv) storing, at the data storage, deviation data corresponding to the given ambient light condition, wherein the deviation data comprises at least one of: the reading of the ambient current, the reading of the photocurrent, the calculated difference, for the given ambient light condition; and

(v) repeating (i) to (iv) for the plurality of ambient light conditions.

In some implementations, the reading of the ambient current is used to indicate the given ambient light condition in the deviation data. Optionally, in this regard, the tracking method further comprises:

collecting a current reading of the ambient current of the at least one photodiode for the current ambient light condition, whilst the at least one IR light emitter is switched off; and

identifying the at least one of the plurality of ambient light conditions that matches with the current ambient light condition, based on the current reading of the ambient current.

In other implementations, the tracking method further comprises collecting a reading of an average illuminance in an ambient environment for the given ambient light condition, by employing an ambient light sensor, wherein the reading of the average illuminance is used to indicate the given ambient light condition in the deviation data. Optionally, in this regard, the tracking method further comprises:

collecting a current reading of the average illuminance for the current ambient light condition; and
identifying the at least one of the plurality of ambient light conditions that matches with the current ambient light condition, based on the current reading of the average illuminance.

Moreover, optionally, the plurality of ambient light conditions comprise a fully-dark ambient light condition, wherein the tracking method further comprises:

collecting different readings of the ambient current of the at least one photodiode for the fully-dark ambient light condition corresponding to different temperature ranges; and

storing, at the data storage, the different readings of the ambient current of the at least one photodiode for the fully-dark ambient light condition corresponding to the different temperature ranges.

Optionally, in this regard, the tracking method further comprises:

determining a current ambient temperature using the temperature sensor, when collecting the current reading of the photocurrent of the at least one photodiode for the current ambient light condition; and

accessing, from the data storage, a reading of the ambient current of the at least one photodiode for the fully-dark ambient light condition corresponding to a given temperature range that matches with the current ambient temperature,

wherein the current reading of the photocurrent of the at least one photodiode for the current ambient light condition is corrected, further based on the reading of the ambient current for the fully-dark ambient light condition corresponding to the given temperature range that matches with the current ambient temperature.

DETAILED DESCRIPTION OF THE DRAWINGS

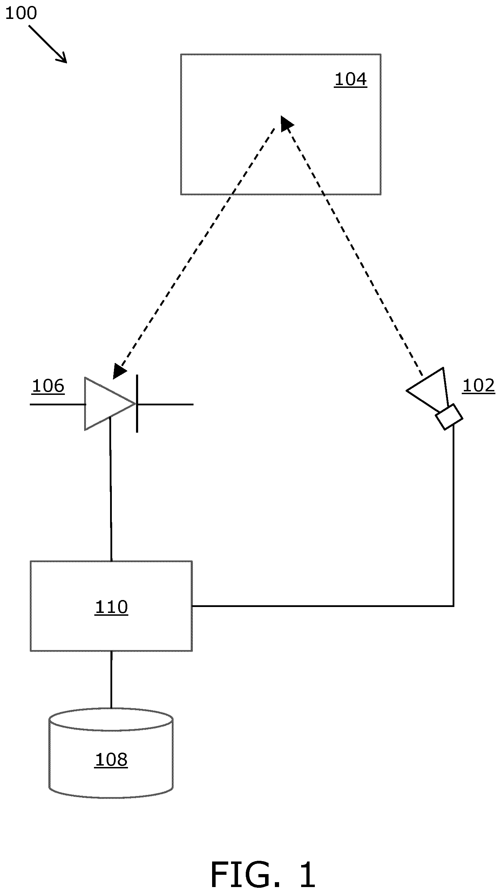

Referring to FIGs. 1, illustrated is a schematic diagram of a tracking system **100,** in accordance with an embodiment of the present disclosure. The tracking system **100** comprises at least one IR light emitter (depicted as an IR light emitter **102)** that is employed to emit light (depicted with a dashed arrow) towards a target **104,** at least one photodiode (depicted as a photodiode **106)** that is employed to sense reflections (depicted with another dashed arrow) of the light off the target **104,** a data storage **108,** and at least one processor (depicted as a processor **110).** The processor **110** is configured to:

when sensing the reflections, collect a current reading of a photocurrent of the photodiode **106** for a current ambient light condition, whilst the IR light emitter **102** is switched on;

access, from the data storage **108,** deviation data corresponding to at least one of a plurality of ambient light conditions that matches with the current ambient light condition, said deviation data comprising at least one of: a reading of an ambient current of the photodiode **106** collected when the IR light emitter **102** is switched off, a reading of the photocurrent of the photodiode **106** collected when the IR light emitter **102** is switched on, a difference between said reading of the ambient current and said reading of the photocurrent, for the at least one of the plurality of ambient light conditions;

correct the current reading of the photocurrent of the photodiode **106** for the current ambient light condition, based on the deviation data corresponding to the at least one of the plurality of ambient light conditions; and

utilise the current reading of the photocurrent of the photodiode **106,** after correcting, to determine a position and an orientation of the target **104.**

It may be understood by a person skilled in the art that FIG. 1 includes a simplified diagram of the tracking system **100,** for sake of clarity, which should not unduly limit the scope of the claims herein. It is to be understood that a specific implementation of the tracking system **100** is provided as an example and is not to be construed as limiting it to specific numbers or types of IR light emitters, photodiodes, data storages, and processors. The person skilled in the art will recognize many variations, alternatives, and modifications of embodiments of the present disclosure.

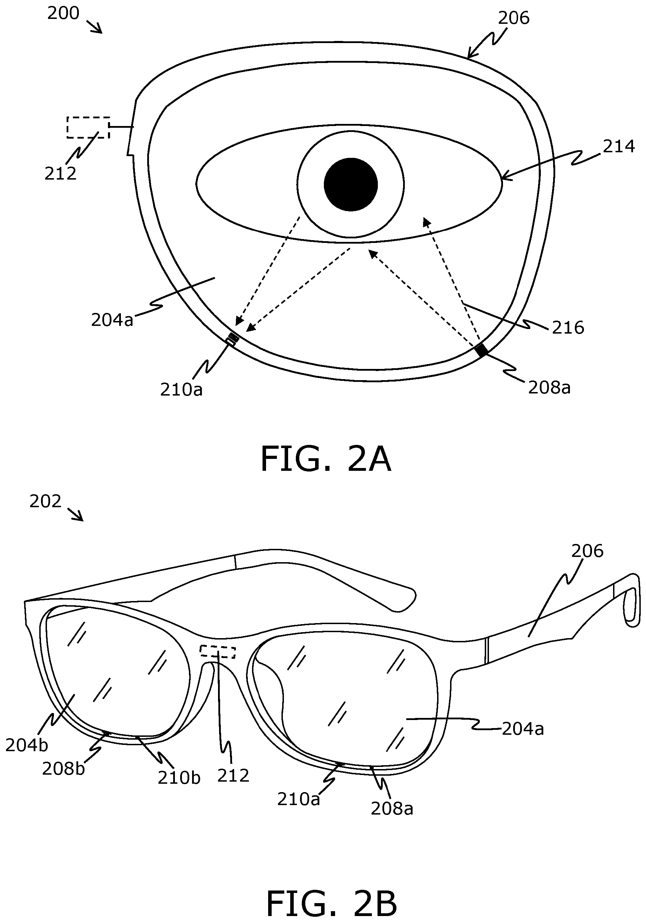

Referring next to FIGs. 2A and 2B, illustrated is an example implementation of a tracking system **200,** in accordance with an embodiment of the present disclosure. In FIGs. 2A and 2B, the tracking system **200** is shown to be implemented in an eyewear apparatus **202.** The eyewear apparatus **202** comprises at least one lens (depicted as lenses **204a** and **204b)** and a frame **206.** The tracking system **200** comprises at least one IR light emitter (depicted as IR light emitters **208a** and **208b),** at least one photodiode (depicted as photodiodes **210a** and **210b),** a data storage (not shown), and at least one processor (depicted as a processor **212).** The IR light emitters **208a-b** and the photodiodes **210a-b** are shown to be arranged on a periphery of the frame **206,** for illustration purposes only.

When the tracking system **200** is implemented in the eyewear apparatus **202,** a target **214** being tracked is a given eye of a user wearing the eyewear apparatus **202.** For the sake of simplicity and convenience, only a portion of the eyewear apparatus **202** that corresponds to the given eye is shown in FIG. 2A. The IR light emitter **208a** is shown to emit light **216** (depicted using dashed lines) towards the target **214.** A reflection of the light **216** off the target **214** incident upon the photodiode **210a** is then sensed by the photodiode **210a.**

Referring to FIG. 3, illustrated are steps of a tracking method, in accordance with an embodiment of the present disclosure. At step **302,** light is emitted towards a target by employing at least one IR light emitter. At step **304,** reflections of the light off the target are sensed by employing at least one photodiode, wherein the step **304** comprises collecting a current reading of a photocurrent of the at least one photodiode for a current ambient light condition, whilst the at least one IR light emitter is switched on. At step **306,** deviation data corresponding to at least one of a plurality of ambient light conditions that matches with the current ambient light condition is accessed from a data storage. The deviation data comprises at least one of: a reading of an ambient current of the at least one photodiode collected when the at least one IR light emitter is switched off, a reading of the photocurrent of the at least one photodiode collected when the at least one IR light emitter is switched on, a difference between said reading of the ambient current and said reading of the photocurrent, for the at least one of the plurality of ambient light conditions. At step **308,** the current reading of the photocurrent of the at least one photodiode for the current ambient light condition is corrected, based on the deviation data corresponding to the at least one of the plurality of ambient light conditions. At step **310,** the current reading of the photocurrent of the at least one photodiode is utilised, after correcting, to determine a position and an orientation of the target.

The aforementioned steps are only illustrative and other alternatives can also be provided where one or more steps are added, one or more steps are removed, or one or more steps are provided in a different sequence without departing from the scope of the claims.

Referring to FIG. 4, illustrated is a curve plotted between readings of a photocurrent and readings of an ambient current of a photodiode for different ambient light conditions, in accordance with an embodiment of the present disclosure. These readings were taken during an experimental setup. An IR LED was used as an IR light emitter, wherein a current level of the IR LED (also known as pulse drive current) was adjusted, such that a photocurrent of the photodiode was approximately 28000 ADC counts in a fully-dark ambient light condition. Another IR LED was driven from a controlled current source, to produce an adjustable background IR light flux, to simulate different ambient light conditions.

A horizontal axis represents the ambient current of the photodiode due to different ambient light conditions (simulated using the another IR LED), when the IR LED is switched off. The ambient current is expressed in ADC counts, and is scaled to $10^5$ times of the values indicated in the horizontal axis. The ADC count can be converted into microamperes ($\mu$A) by using a following conversion: 524000 ADC counts = 32 $\mu$A.

A vertical axis represents the photocurrent of the photodiode having an effect of the different ambient light conditions, when the IR LED is switched ON. The photocurrent is also expressed in ADC counts, and is scaled to $10^4$ times of the values indicated in the vertical axis. The ADC count can be converted into microamperes by using a following conversion: 28000 ADC counts = 2 $\mu$A.

It is evident from the values of the curve that a response of the photodiode (measured in terms of the photocurrent of the photodiode) increased with increasing a brightness of the ambient light (simulated using the another IR LED), from the 28000 ADC counts to 32500 ADC counts, but starts to saturate. In other words, the response of the photodiode to the light emitted by the IR LED reduces when the brightness of the ambient light increases.

Pursuant to embodiments of the present disclosure, the readings of the photocurrent can be corrected by employing a correction curve, which is an inverse of the curve shown in FIG. 4. Accordingly, a correction factor for a given ambient light condition can be selected from the correction curve, because the correction curve corresponds to the different ambient light conditions.

FIG. 4 is merely an example, which should not unduly limit the scope of the claims herein. The person skilled in the art will recognize many variations, alternatives, and modifications of embodiments of the present disclosure.

**Claims**

1.  A tracking system (100, 200) comprising:

    at least one infrared (IR) light emitter (102, 208a-b) that is employed to emit light (216) towards a target (104, 214);
    at least one photodiode (106, 210a-b) that is employed to sense reflections of the light off the target;
    a data storage (108); and
    at least one processor (110, 212) configured to:

    when sensing the reflections, collect a current reading of a photocurrent of the at least one photodiode for a current ambient light condition, whilst the at least one IR light emitter is switched on;
    access, from the data storage, deviation data corresponding to at least one of a plurality of ambient light conditions that matches with the current ambient light condition, said deviation data comprising at least one of: a reading of an ambient current of the at least one photodiode collected when the at least one IR light emitter is switched off, a reading of the photocurrent of the at least one photodiode collected when the at least one IR light emitter is switched on, a difference between said reading of the ambient current and said reading of the photocurrent, for the at least one of the plurality of ambient light conditions;
    correct the current reading of the photocurrent of the at least one photodiode for the current ambient light condition, based on the deviation data corresponding to the at least one of the plurality of ambient light conditions; and
    utilise the current reading of the photocurrent of the at least one photodiode, after correcting, to determine a position and an orientation of the target.

2.  The tracking system (100, 200) of claim 1, wherein the at least one processor (110, 212) is configured to collect a current reading of the ambient current of the at least one photodiode (106, 210a-b) for the current ambient light condition, whilst the at least one IR light emitter (102, 208a-b) is switched off,
    wherein the current reading of the photocurrent of the at least one photodiode for the current ambient light condition is corrected, further based on the current reading of the ambient current for the current ambient light condition.

3.  The tracking system (100, 200) of any of the preceding claims, wherein the at least one processor (110, 212) is configured to:

(i) collect a reading of the ambient current of the at least one photodiode (106, 210a-b) for a given ambient light condition, whilst the at least one IR light emitter (102, 208a-b) is switched off;

(ii) collect a reading of the photocurrent of the at least one photodiode for the given ambient light condition, whilst the at least one IR light emitter is switched on;

(iii) optionally, calculate a difference between the reading of the ambient current and the reading of the photocurrent for the given ambient light condition;

(iv) store, at the data storage (108), deviation data corresponding to the given ambient light condition, wherein the deviation data comprises at least one of: the reading of the ambient current, the reading of the photocurrent, the calculated difference, for the given ambient light condition; and

(v) repeat (i) to (iv) for the plurality of ambient light conditions.

4. The tracking system (100, 200) of claim 3, wherein the reading of the ambient current is used to indicate the given ambient light condition in the deviation data.

5. The tracking system (100, 200) of claim 4, wherein the at least one processor (110, 212) is configured to:

collect a current reading of the ambient current of the at least one photodiode (106, 210a-b) for the current ambient light condition, whilst the at least one IR light emitter (102, 208a-b) is switched off; and

identify the at least one of the plurality of ambient light conditions that matches with the current ambient light condition, based on the current reading of the ambient current.

6. The tracking system (100, 200) of claim 3, further comprising an ambient light sensor that is employed to sense an average illuminance in an ambient environment, wherein the at least one processor (110, 212) is configured to collect a reading of the average illuminance for the given ambient light condition, wherein the reading of the average illuminance is used to indicate the given ambient light condition in the deviation data.

7. The tracking system (100, 200) of claim 6, wherein the at least one processor (110, 212) is configured to:

collect a current reading of the average illuminance for the current ambient light condition; and

identify the at least one of the plurality of ambient light conditions that matches with the current ambient light condition, based on the current reading of the average illuminance.

8. The tracking system (100, 200) of any of the preceding claims, further comprising a temperature sensor, wherein the plurality of ambient light conditions comprise a fully-dark ambient light condition, wherein the at least one processor (110, 212) is configured to:

collect different readings of the ambient current of the at least one photodiode (106, 210a-b) for the fully-dark ambient light condition corresponding to different temperature ranges;

store, at the data storage (108), the different readings of the ambient current of the at least one photodiode for the fully-dark ambient light condition corresponding to the different temperature ranges;

determine a current ambient temperature using the temperature sensor, when collecting the current reading of the photocurrent of the at least one photodiode for the current ambient light condition; and

access, from the data storage, a reading of the ambient current of the at least one photodiode for the fully-dark ambient light condition corresponding to a given temperature range that matches with the current ambient temperature,

wherein the current reading of the photocurrent of the at least one photodiode for the current ambient light condition is corrected, further based on the reading of the ambient current for the fully-dark ambient light condition corresponding to the given temperature range that matches with the current ambient temperature.

9. A tracking method comprising:

emitting light (216) towards a target (104, 214) by employing at least one infrared (IR) light emitter (102, 208a-b);

sensing reflections of the light off the target by employing at least one photodiode (106, 210a-b), wherein the step of sensing the reflections comprises collecting a current reading of a photocurrent of the at least one photodiode for a current ambient light condition, whilst the at least one IR light emitter is switched on;

accessing, from a data storage (108), deviation data corresponding to at least one of a plurality of ambient light conditions that matches with the current ambient light condition, said deviation data comprising at least one of: a reading of an ambient current of the at least one photodiode collected when the at least one IR light emitter is switched off, a reading of the photocurrent of the at least one photodiode collected when the at least one IR light emitter is switched on, a difference between said reading of the ambient current and said reading of the photocurrent, for the at least one of the plurality of ambient light conditions;

correcting the current reading of the photocurrent of the at least one photodiode for the current ambient light condition, based on the deviation data corresponding to the at least one of the plurality of ambient light conditions; and

utilising the current reading of the photocurrent of the at least one photodiode, after correcting, to determine a position and an orientation of the target.

10. The tracking method of claim 9, further comprising collecting a current reading of the ambient current of the at least one photodiode (106, 210a-b) for the current ambient light condition, whilst the at least one IR light emitter (102, 208a-b) is switched off,
wherein the current reading of the photocurrent of the at least one photodiode for the current ambient light condition is corrected, further based on the current reading of the ambient current for the current ambient light condition.

11. The tracking method of claim 9 or 10, further comprising:

(i) collecting a reading of the ambient current of the at least one photodiode (106, 210a-b) for a given ambient light condition, whilst the at least one IR light emitter (102, 208a-b) is switched off;
(ii) collecting a reading of the photocurrent of the at least one photodiode for the given ambient light condition, whilst the at least one IR light emitter is switched on;
(iii) optionally, calculating a difference between the reading of the ambient current and the reading of the photocurrent for the given ambient light condition;
(iv) storing, at the data storage (108), deviation data corresponding to the given ambient light condition, wherein the deviation data comprises at least one of: the reading of the ambient current, the reading of the photocurrent, the calculated difference, for the given ambient light condition; and
(v) repeating (i) to (iv) for the plurality of ambient light conditions.

12. The tracking method of claim 11, wherein the reading of the ambient current is used to indicate the given ambient light condition in the deviation data.

13. The tracking method of claim 12, further comprising:

collecting a current reading of the ambient current of the at least one photodiode (106, 210a-b) for the current ambient light condition, whilst the at least one IR light emitter (102, 208a-b) is switched off; and
identifying the at least one of the plurality of ambient light conditions that matches with the current ambient light condition, based on the current reading of the ambient current.

14. The tracking method of claim 11, further comprising collecting a reading of an average illuminance in an ambient environment for the given ambient light condition, by employing an ambient light sensor, wherein the reading of the average illuminance is used to indicate the given ambient light condition in the deviation data.

15. The tracking method of claim 14, further comprising:

collecting a current reading of the average illuminance for the current ambient light condition; and
identifying the at least one of the plurality of ambient light conditions that matches with the current ambient light condition, based on the current reading of the average illuminance.

16. The tracking method of any of claims 9-15, wherein the plurality of ambient light conditions comprise a fully-dark ambient light condition, wherein the tracking method further comprises:

collecting different readings of the ambient current of the at least one photodiode (106, 210a-b) for the fully-dark ambient light condition corresponding to different temperature ranges;
storing, at the data storage (108), the different readings of the ambient current of the at least one photodiode for the fully-dark ambient light condition corresponding to the different temperature ranges;
determining a current ambient temperature using the temperature sensor, when collecting the current reading of the photocurrent of the at least one photodiode for the current ambient light condition; and

accessing, from the data storage, a reading of the ambient current of the at least one photodiode for the fully-dark ambient light condition corresponding to a given temperature range that matches with the current ambient temperature,

wherein the current reading of the photocurrent of the at least one photodiode for the current ambient light condition is corrected, further based on the reading of the ambient current for the fully-dark ambient light condition corresponding to the given temperature range that matches with the current ambient temperature.

100

104

106

102

110

108

FIG. 1

FIG. 2A

FIG. 2B

FIG. 3

FIG. 4